# EUROPEAN PATENT APPLICATION

(11) **EP 2 183 982 A1**
(43) Date of publication of application: **12.05.2010**
(21) Application number: 09013881.9
(22) Date of filing: 05.11.2009
(51) Int. Cl.: A23L 1/015, A23L 3/3445, A23B 7/152, A23B 9/22, A23L 1/211

(54) **Method and apparatus for sanitizing foodstuffs contaminated with mycotoxins**

(30) Priority: 11.11.2008 IT MI20081993
(71) Applicant: Mazzariello, Francesco, 83042 Atripalda (AV) (IT)
(72) Inventor: Mazzariello, Francesco, 83042 Atripalda (AV) (IT)
(74) Representative: Ferreccio, Rinaldo

(57) **Abstract**

Method and apparatus for sanitizing a foodstuff (100) contaminated with mycotoxins.

The method comprises the steps of: placing the foodstuff (100) inside a reaction chamber (20), generating an aeriform fluid comprising ozone and conveying the aeriform fluid, feeding it into the reaction chamber (20) to degrade at least part of the contaminant mycotoxin molecules, checking the temperature of the inactivation reaction.

The apparatus (1) comprises means for the generation of an aeriform fluid comprising ozone (3), a reaction chamber (20) intended to contain a foodstuff (100) contaminated with mycotoxins, means for conveying the aeriform fluid to the reaction chamber (20) and means for controlling the temperature (5) inside the reaction chamber (20).

## Description

### Field of application

The present invention relates to a method and to an apparatus for sanitizing food products contaminated with mycotoxins.

More particularly the method and the apparatus according to the invention refer to the detoxification of agricultural food products, in granular and/or powder form, contaminated with mycotoxins.

These agricultural food products can comprise cereals, in particular barley, sorghum, rice and corn, or also soy, groundnuts, hazelnuts or again other products prone to contamination with aflatoxins.

### Prior art

Mycotoxins are toxic molecules produced by the secondary metabolism of some parasitic fungi which, with favourable microclimatic conditions, can proliferate, infesting foodstuffs of various types and consistencies.

More particularly, among the aforesaid toxins, the so-called aflatoxins are particularly widespread, caused by moulds belonging to the Aspergillus, Penicillium and Fusarium genuses.

The presence of these contaminants, even in relatively small quantities, seriously jeopardises the salubriousness of products intended for consumption by humans or animals.

In consideration of what is described above, various prevention strategies are implemented to avoid the formation of the fungal floral responsible for the toxins. We include here by way of example the use of vegetable varieties resistant to attack by the moulds responsible for the contamination, or again the systematic attention to the microclimatic conditions of storage, transport and processing of the product.

Unfortunately however these precautions are not uniformly widespread in the world farming community and consequently distributors in the food industry often have to dispose of contaminated foodstuffs. These products, barring sanitization which to date is not always feasible, must be taken off the market.

In particular cases the products can be decontaminated, i.e. there are economically sustainable technological methods for identifying and removing only the contaminated parts from the mass harvested. This system of sanitization is however in practice limited to some specific food sectors, such as for example the production of vegetable oils.

One alternative consists of detoxifying the corrupted products, i.e. the breaking-up and degradation of the mycotoxin molecules, for example by means of chemical reactions. The molecules of the mycotoxins are however extremely stable and are particularly resistant to most of the detoxifying agents used to date. Consequently an effective detoxification treatment must in general have such intensity as to jeopardise the taste and smell and/or nutritional properties of the product sanitized.

Recent studies propose the use of ozone as a detoxifying agent. Ozone in fact, in addition to having an effective and documented antibacterial action, should also guarantee the oxidative degradation of the mycotoxins (in particular aflatoxins) present in the food treated. Operatively this substance would also guarantee two important advantages: the possibility of application in the gaseous phase and no alterations of the taste and smell and nutritional properties of the product treated.

On the other hand however, studies carried out to date show a limited efficacy, i.e. only partial abatement of the content of toxins present in the product. In fact the treatment with ozone is proposed as an auxiliary to traditional decontamination by means of heat and/or radiation.

Moreover various considerations against application of the method on an industrial scale have been made, both of an economic and technological nature, for example the production and disposal on a continuous basis of high quantities of ozone are excessively onerous.

### Summary of the invention

The technical problem at the basis of the present invention is that of providing a method for sanitizing foodstuffs contaminated with mycotoxins which overcomes the disadvantages of the prior art described above.

The aforesaid technical problem is solved by a method in accordance with claim 1 and by apparatus for performance of such a method according to claim 9.

The dependent claims disclose preferred and particularly advantageous embodiments of the method and of the apparatus respectively according to the invention.

Substantially the basic idea lies in the use of ozone in the gaseous state as detoxifying agent, maintaining the solid-gas reaction temperature at values close to zero centigrade. Surprising experimental data have in fact shown a considerable improvement in the efficacy of treatment at low temperatures.

A substantial advantage of the method according to the present invention is found in the improved efficiency compared to the processes of the prior art. The method ensures in fact the abatement of higher percentages of contaminants in a reasonably limited period of treatment.

Another advantage of the method according to the invention lies in the economical nature of the detoxification process which, unlike known processes, does not require the production and disposal as a continuous process of large quantities of ozone. A similar advantage relates to the feed air. In fact, once the apparatus has been started up and the working temperatures reached, good insulation allows reduction to a minimum of the energy consumption necessary for refrigeration. Such an advantage would not exist if the apparatus were to work with an open circuit.

One advantage of the apparatus according to the invention derives from the extremely simple and economical construction of the same, thanks also to the use of components which are for the most part readily available on the market.

Another advantage of the apparatus according to the invention is determined by the capacity of the chamber intended for sanitizing operations and the simplicity of the operations of loading and discharging said chamber.

A further advantage concerning the apparatus according to the present invention derives from the uniform diffusion of the ozone inside the mass of foodstuff to be sanitized, and therefore the homogeneity of the treatment in relation to the same product mass.

Further features and advantages will be made clearer by the detailed description given herein below of a preferred but not exclusive embodiment of the present invention, referring to the accompanying drawings, given by way of a non-limiting example.

### Brief description of the drawings

Figure 1 gives a simplified working diagram of the apparatus according to the present invention;
Figure 2 shows a more detailed schematic view of the apparatus according to the present invention;
Figure 3 shows a vertical section of a discharge hopper forming part of the apparatus illustrated in Figures 1 and 2.

### Detailed description

Referring to the accompanying drawings, reference numeral 1 denotes generically apparatus for sanitizing foodstuffs 100 contaminated with mycotoxins.

This apparatus 1 allows implementation of a method for sanitizing foodstuffs 100 contaminated with mycotoxins described herein below.

The apparatus 1 comprises means for the generation of an aeriform fluid comprising ozone, a reaction chamber 20 intended to contain a foodstuff 100 contaminated with mycotoxins and means for conveying the aeriform fluid into the reaction chamber 2. Moreover the apparatus 1 comprises means for controlling the temperature 5 inside the reaction chamber 20, which, as mentioned previously and discussed further herein below, allow an unexpected increase in the efficiency of the reaction of detoxification of the foodstuff 100 to be sanitized.

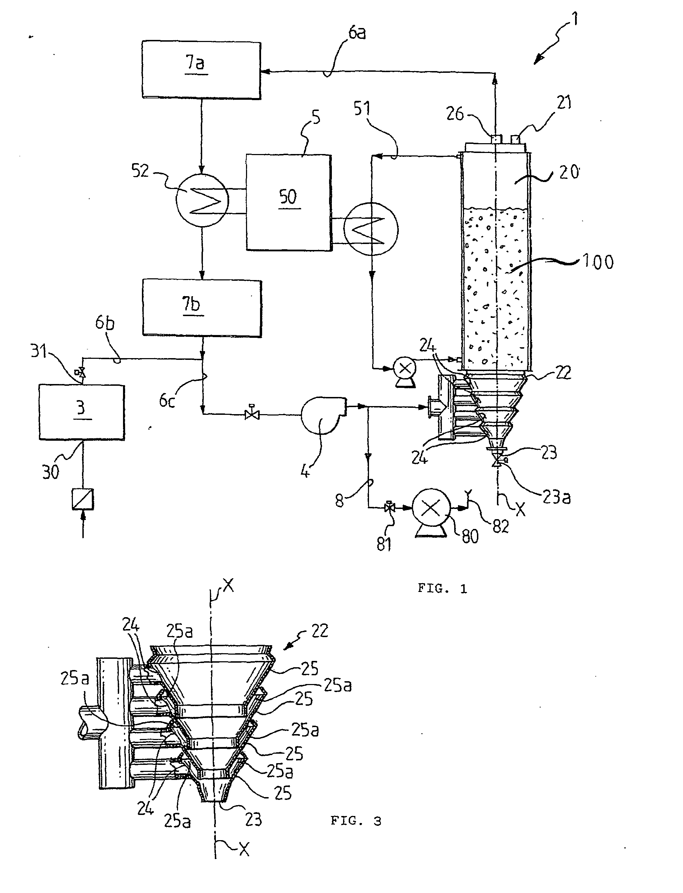

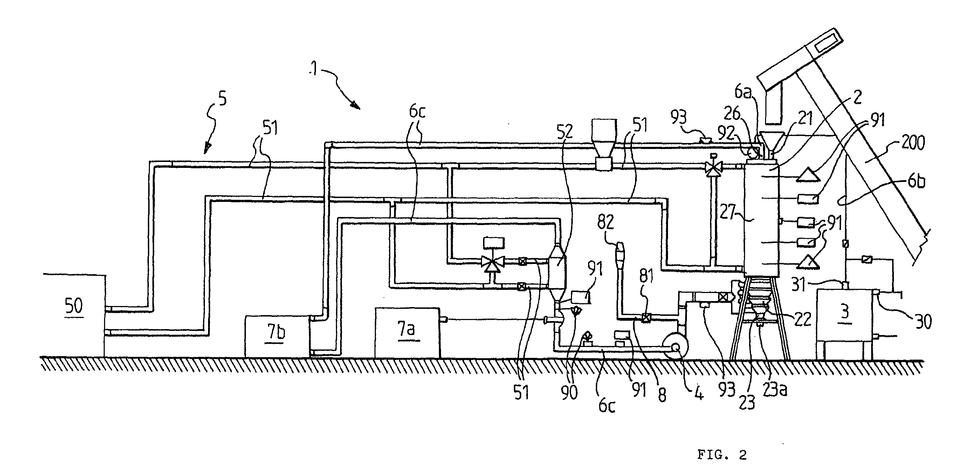

The means for the generation of an aeriform fluid comprising ozone, denoted by 3 in accompanying Figures 1 and 2, can consist of any type of device able to supply an aeriform flow comprising molecules of ozone (O₃) in the gaseous state. The aeriform flow can moreover have any type of composition or even be composed of gaseous ozone alone. Preferably, in the embodiment according to the present invention, the aeriform flow is a mixture of humid or dry air and gaseous ozone.

For the purposes mentioned, said means for the generation of an aeriform fluid 3 comprise in the preferred embodiment a known generator of ozone functioning according to the principle of the corona effect. This ozone generator can be fed with air or pure oxygen via a feed inlet 30; the fed gas is then subjected to electrical discharges to disassociate the oxygen molecules, generating ozone. The resulting aeriform fluid, in this case a gaseous mixture rich in ozone, is introduced into the apparatus via a discharge outlet 31.

The ozone generator is advantageously fed with oxygen or air under pressure (4-5 bar), in such a way that the aeriform fluid in output from the generation means 3 is conveyed by means of the pressure energy transmitted thereto in a duct associated with the discharge outlet 31.

The apparatus 1 comprises, in its preferred embodiments, a silo 2 defining internally the reaction chamber 20. The silo 2 is intended to contain, in the reaction chamber 20, foodstuffs 100 to be sanitized, for a period of time sufficient for allowing the required abatement of the mycotoxins present in the product.

As discussed previously, the foodstuff 100 is preferably composed of an agricultural food product in a granular and/or powder form, contaminated with mycotoxins.

The silo 2 has similar features to normal silos for the storage of foodstuffs in granular form. More particularly it has advantageously an upper loading aperture 21, intended to allow the introduction of the foodstuff 100 via suitable conveyor means 200, preferably of the closed type to prevent dispersion in the environment of the contaminated foodstuff 100, and a lower discharge hopper 22 which has at its lower end a discharge aperture 23 which can be occluded by means of a discharge valve 23a. The loading 21 and discharge 23 apertures obviously communicate with the reaction chamber 2. The accompanying Figure 2 shows the upper loading aperture 21 and the conveyor means 200, in this case composed of a screw conveyor. It should be understood that the type of conveyor must not be seen as a limitation of the sphere of protection of the present patent. Alternative embodiments can in fact comprise bucket elevators, pneumatic conveyors or other different constructional types. The introduction of the aeriform fluid in the reaction chamber 2 takes place preferably at the discharge hopper 22. For this purpose the discharge hopper preferably has a plurality of intake holes 24. The discharge hopper 22 advantageously has a particular shape, described herein below with particular reference to the accompanying Figure 3, designed both to encourage better diffusion of the ozone inside the foodstuff 100, and to facilitate the discharge of the foodstuff 100 on opening of the discharge valve 23a.

The discharge hopper 22 comprises a plurality of superimposed truncated cone portions 25, preferably coaxial to a longitudinal axis x of the silo 2. Each portion 25 ends with a base section which is introduced, like a funnel, inside the subsequent portion 25, which in turn has a base section with smaller diameter than the previous one. As can be seen clearly in the section of Figure 3, between a first truncated cone portion 25 and the underlying one an annular interstitial volume 25a is defined, above the plane on which the base section of the first portion lies. The intake holes 24 face each other at concentric interstitial volumes 25a defined by the coming together of the subsequent portions 25.

Thanks to this morphology the aeriform fluid in input diffuses in the mass of foodstuff 100 starting from a different radial distance from the longitudinal axis x according to the intake hole 24 fed. Thus uniform diffusion of the aeriform fluid is obtained inside the entire volume of foodstuff 100 stored.

The silo 2 has above at least one outlet hole 26 for the aeriform fluid fed into the reaction chamber 20. The reaction fluid is therefore introduced from the base of the reaction chamber 20 and is released at the head thereof, after having traversed longitudinally the entire chamber 20 and coming into contact with the entire mass of the foodstuff 100.

The means for conveying the aeriform fluid to the reaction chamber 20 comprise in the embodiments illustrated a connection duct 6b, 6c between means for the generation of an aeriform fluid 3 and reaction chamber 20, and a blower 4 positioned along said connection duct 6b, 6c. Alternative embodiments to the one illustrated may not contemplate the presence of a blower 4, providing as an alternative different means for moving the fluid or delocalised in relation to the extension of the connection duct 6b, 6c.

The apparatus 1 comprises advantageously means for recirculating the aeriform fluid expelled from the outlet hole 26, reintroducing it into the reaction chamber 20, preferably via the intake holes 24. These means comprise a duct 6a, 6c for recirculation of the aeriform fluid, which places in communication the outlet hole 26 with the intake holes 24 outside of the reaction chamber 20. Advantageously, the recirculation duct 6a, 6c and the connection duct 6b, 6c have a common section 6c at the intake holes 24. The first sections 6a, 6b of the recirculation and connection ducts are instead independent.

The blower 4 described previously is positioned on the common section 6c and is therefore part of both the means for conveying the aeriform fluid to the reaction chamber 20, and of the means for recirculating the aeriform fluid defined previously.

The means for controlling the temperature 5 inside the reaction chamber 20 comprise advantageously a refrigerator 50. In fact, as will be discussed herein below, totally unexpected test data have shown a considerable improvement in the efficacy of sanitizing with ozone at low temperatures.

To maintain the temperature of the inactivation reaction at sufficiently low values, the refrigerator 50 is set up to subtract heat both from the foodstuff 100 contained inside the reaction chamber 20, and from the aeriform fluid circulating in the connection and recirculation ducts 6a, 6b, 6c and in the reaction chamber 20 itself.

To achieve the abovementioned objects, the refrigerator 50 comprises a cooling circuit 51 which feeds both a heat exchanger 52, and an external cooling liner 53 of the silo 2. The cooling circuit 51 can use any suitable cooling fluid, for example water-glycol.

Naturally an alternative embodiment of the apparatus 1 according to the invention may comprise two different refrigerators 50, with separate cooling circuits 51 set up to feed the heat exchanger 52 and the cooling liner 53 respectively.

The heat exchanger 52 is preferably positioned on the recirculation duct 6a, 6c. It may be positioned along the first section 6a of the duct, as in the embodiment of Figure 1, or along the section 6c in common with the connection duct, as can be seen in Figure 2, in such a way as to cool both the aeriform fluid in output from the ozone generator and the aeriform fluid recirculated starting from the reaction chamber 20 before being fed inside the silo 2.

The heat exchanger 52 is also comprised in the means for controlling the temperature 5 inside the reaction chamber 20 defined previously, in that in actual fact it contributes to the control of the temperature inside this chamber 20, albeit indirectly, by varying the temperature of the aeriform fluid which flows there.

The cooling liner 53 surrounds a main cylindrical portion 27, above the discharge hopper 22, of the silo 2. The external wall of the cooling liner 53 is made in a material with good heat insulation properties in order to improve the efficiency of the cycle of refrigeration of the reaction chamber 20.

The apparatus 1 comprises advantageously means for varying the humidity value 7a, 7b of the aeriform fluid before its entry in the reaction chamber 20. These means, composed of a dehumidifier 7a and a humidifier 7b installed in series along the common section 6c of the connection and recirculation ducts or along the first section 6a of the recirculation duct, have a substantial influence, which will be explained in greater detail herein below, on the efficiency of the reaction of sanitizing of the foodstuff 100 contained in the reaction chamber 20.

In the preferred embodiment illustrated in Figure 1, the dehumidifier 7a is positioned downstream of the heat exchanger 52, while the humidifier 7b is positioned upstream thereof. Such a configuration means that the humidity possibly present in the aeriform fluid is prevented from condensing or even freezing on the tube bundle of the exchanger.

In its embodiment illustrated the apparatus 1 comprises a duct 8 for expulsion of the aeriform fluid, and a aspiration compressor 80 positioned on said duct. The opening of the expulsion duct is preferably actuated by an expulsion valve 81. The expulsion duct 8 engages preferably on the common section 6c of the connection and recirculation ducts downstream of the blower 4. It also comprises a catalytic ozone destroyer 82 for preventing the dispersion of free ozone in the atmosphere.

Advantageously, the aspiration compressor 80 enables the aeriform fluid circulating in the apparatus 1 to be maintained in a slight vacuum, in such a way as to prevent undesirable and hazardous leaks of ozone into the atmosphere.

The apparatus 1, for its proper functioning, comprises a control system able to regulate the operative variables of interest of the system. These variables comprise categorically the temperature, and may also comprise, according to the embodiments, the pressure, humidity, flow rate and concentration of ozone in the aeriform fluid.

By way of an example, the apparatus illustrated in Figure 2 comprises advantageously the following sensors co-operating with the control system: flow rate meters 90 and temperature sensors 91 positioned on the common section 6c of the connection and recirculation ducts; temperature sensors 91 and a pressure gauge 92 positioned at the silo 2; ozone detectors 93 positioned in input and in output to the recirculation circuit 6a, 6c.

We will now discuss the salient steps of the method for sanitizing a foodstuff 100 contaminated with mycotoxins according to the present invention. As mentioned above, this method is suitable for being implemented, preferably, but not exclusively, with apparatus 1 of the type described above. To simplify the description the method is described here with reference to the components of the apparatus 1 defined above. It is understood that these references are not however to be seen in a limitative sense.

The method comprises the steps of placing the foodstuff 100 inside the reaction chamber 20, generating an aeriform fluid comprising ozone, conveying the aeriform fluid generated and introducing it in the reaction chamber 20, and degradation of at least part of the molecules of mycotoxins contaminating the foodstuff 100 by means of an inactivation reaction with the ozone comprised in the aeriform fluid.

The step of placing the foodstuff 100 inside the reaction chamber 20 is implemented, with reference to the apparatus 1, by means of the conveyor means 200 suitable for filling the silo 2 which defines internally the chamber 20. A batch of foodstuff 100 is introduced into the chamber to be sanitized; after sanitizing the method can advantageously comprise a step of extracting the foodstuff 100 treated from the chamber, for example by means of the discharge hopper 22 described previously.

The treatment times of a single batch depend on the dimensions of the batch, on the type of foodstuff 100 treated and on the required percentage of degradation of the mycotoxins. For information purposes we would like to point out that a treatment time of between one and two hours allows the degradation of a percentage higher than 80% of the aflatoxins contained in half a tonne of corn.

The step of generating an aeriform fluid comprising ozone takes place preferably via means for the generation 3 of the same fluid, of the type discussed previously. Experimental tests have demonstrated that, in order to obtain satisfactory efficacy of the sanitizing process, it is necessary to generate an aeriform fluid with concentration of ozone of at least 10 g/Nm³. Preferably, the aeriform fluid generated is a mixture of air and ozone with concentration of the ozone between 15 and 30 g/N^{m}3, or alternatively a mixture of oxygen and ozone with concentration of the ozone between 60 and 100 g/Nm³.

The step of conveying the aeriform fluid generated in the reaction chamber 20 is preferably carried out by means of the blower 4 or another device suitable for encouraging movement of the flow. In the case of application of the method to the apparatus 1, the fluid is conveyed via the connection duct 6b, 6c defined previously.

The flow rate of aeriform fluid conveyed towards the reaction chamber 20 can be chosen appropriately on the basis of the specific needs encountered by a person skilled in the art. Purely by way of an example a flow rate of aeriform fluid between 300 and 1400 m³/h has been found to be satisfactory for sanitizing 500 kg of grain contained in the reaction chamber 20.

The step of conveying the aeriform fluid generated into the reaction chamber 20 comprises a step of introducing the aeriform fluid into the reaction chamber 20 which is particularly delicate for the purposes of efficient sanitizing of the foodstuff 100. In this phase it is in fact important to introduce the aeriform fluid so as to guarantee even distribution thereof inside the reaction chamber 20, in order to ensure the uniformity of treatment of the foodstuff 100 stored there.

To achieve the objective set, the aeriform fluid is introduced at the base of a reaction chamber 20 which has a vertical extension, the method also comprising a step of extracting this aeriform fluid from the top of the chamber.

Preferably, in order to facilitate uniform distribution thereof, the fluid is introduced at a plurality of zones having a different distance in relation to a central vertical axis of the reaction chamber 20. In the apparatus 1 according to the invention, the particular morphology of the discharge hopper 22 and the arrangement thereon of the plurality of intake holes 24 allow the aeriform fluid to be introduced according to this procedure.

The method can also advantageously comprise, in addition to the aforementioned step of extracting the aeriform fluid from the reaction chamber 20, a step of recirculating this extracted fluid. More particularly in this phase the aeriform fluid extracted is moved via the recirculation duct 6a, 6c outside of the reaction chamber 20 to then be reintroduced therein.

As specified above, the solution of the fluid recirculation allows a considerable saving in the costs of implementing the method or of management of the apparatus 1, by lowering the expense linked to the production and to the disposal of the gaseous ozone. Performance of recirculation is made possible by the fact that the aeriform fluid does not change substantially its parameters of interest by traversing the reaction chamber 20. More particularly experimental data demonstrate that the concentration of ozone inside the aeriform fluid varies in a very limited way.

In combination with the step of recirculating the aeriform fluid, the method in question can advantageously comprise a step of aspirating part of this aeriform fluid towards an external atmosphere to maintain in a vacuum the fluid circulating in the recirculation duct 6a, 6c. This step, which can be actuated for example by means of the aspiration compressor 80 and of the expulsion duct 8 described previously, allows the avoidance of dangerous and undesirable leaks of gaseous ozone into the atmosphere.

We will now briefly discuss the step of degradation of at least part of the molecules of mycotoxins contaminating the foodstuff 100 by means of an inactivation reaction with the ozone comprised in the aeriform fluid.

The molecules of mycotoxins, and in particular of aflatoxins, are decomposed, if maintained in contact for a sufficient reaction time with gaseous ozone, into non-toxic by-products such as carbon dioxide, oxygen and water. The abatement of the toxins present during the period of treatment can be total or partial, in any case preferably sufficient for making edible for humans the foodstuff 100 contained in the reaction chamber 20.

Moreover the presence of ozone in contact with the foodstuff 100 has other positive consequences such as an effective antimicrobial action due to the high oxidative capacity of the substance. In addition to the lysis of the mycotoxins present, the treatment with ozone also causes the destruction of the toxigenic fungi which produced them, thus ensuring the conservation of the treated product after the treatment.

In addition to the steps mentioned previously, the method comprises a step of controlling the temperature of the inactivation reaction. This step is of particular importance given that, as stated several times in the present description, unexpected experimental results bear witness to a surprising improvement in the efficacy of the reaction at low temperatures.

The Applicant has in fact performed laboratory experiments relating to the decontamination of foodstuffs contaminated with mycotoxins, revealing two unexpected results: the dependence of the efficacy of the conversion of the mycotoxins on the temperature and humidity of the aeriform fluid used for treatment.

As regards the temperature, it was found that the increase in the thermal values always has a negative influence on the degradation reaction of the toxins. Ideally it would therefore be desirable to maintain the temperature at the lowest possible value inside the reaction chamber 20.

On the other hand maintaining of the temperature of the aeriform fluid below zero centigrade causes, in addition to an appreciable increase in the preliminary costs, freezing of the water vapour possibly present in the aeriform fluid. This freezing is absolutely to be avoided in that it causes blocking of the apparatus ducts and of the free volumes between the grains or specks of the foodstuff 100 placed in the reaction chamber 20, ultimately hindering the free flowing of the aeriform fluid and therefore the feeding of ozone to the product to be decontaminated.

On the basis of the considerations given above, a temperature range between 0°C and 10°C was identified as ideal for the development of the treatment in question, consequently the method provides for maintaining of the temperature of the inactivation reaction between these two limits.

As can be seen from the description of the apparatus 1, the control of the temperature of the inactivation reaction can be carried out in two ways: by cooling directly the foodstuff 100 inside the reaction chamber 20 (for example by means of the cooling liner 53 defined above) or by cooling the aeriform fluid before its entry in the chamber (for example by means of the heat exchanger 52).

In the method according to the present invention, the step of controlling the temperature of the inactivation reaction can therefore comprise a step of cooling of the foodstuff 100 placed inside the reaction chamber 20, a step of cooling of the aeriform fluid prior to the introduction of the fluid in the chamber, or preferably both these steps.

Preferably, the step of cooling of the foodstuff 100 comprises a step of pre-cooling, subsequent to the step of placing the foodstuff 100 in the reaction chamber 20 yet prior to the step of introduction of the aeriform fluid in the reaction chamber. This step of pre-cooling has the aim of bringing the foodstuff 100 from room temperature to reaction temperature; subsequently the cooling of the foodstuff 100 serves only to maintain this temperature.

As stated above, the laboratory data obtained by the Applicant demonstrate a correlation between humidity of the aeriform fluid comprising ozone used in the treatment and the efficacy of the same treatment. This correlation varies however considerably according to both the temperature, and to the type of foodstuff 100 stored in the reaction chamber 20. More particularly the grain size of the product plays a fundamental role: for products with coarse grain size in fact the humidity plays a positive role for the purposes of efficacy of the treatment (it promotes the formation of a liquid film which encourages ozone adsorption); vice versa for products with a fine grain size.

To maximise the efficacy of the treatment it is therefore necessary for the method to comprise steps of regulation of the humidity of the aeriform fluid. More particularly the method comprises steps of fixing lower and upper threshold values for the humidity as a function of the inherent features of the foodstuff 100 and possibly other parameters of influence. In this case, as discussed above, for the determination of the threshold values at least the grain size of the foodstuff 100 was taken into consideration.

Therefore the method comprises a step of detecting a humidity value of the aeriform fluid, a step of dehumidifying this aeriform fluid should the humidity value exceed the upper threshold value and a step of humidifying the aeriform fluid should the humidity value be below the lower threshold value set.

The lower and upper threshold values preferably coincide, in such a way that the humidity of the aeriform fluid is maintained relatively constant by the presence of the aforementioned steps of humidification and dehumidification.

The steps of humidification and dehumidification are preferably performed by means of the dehumidifier 7a and of the humidifier 7b, which comprise also sensors for implementing the step of detecting the humidity of the aeriform fluid.

To sum up, we shall summarise in the following example the working parameters, already stated previously, which enabled an abatement of the aflatoxins greater than 80% with the apparatus described.

### EXAMPLE

Content of the silo: 500 kg grain
Flow of air/ozone: 1400 m³/h
Percentage of ozone: 30 g/Nm³
Treatment time: 2 hours
Temperature: 0 - 10°C

Obviously a person skilled in the art may make numerous changes and modifications to the invention described above in order to fulfil contingent and specific needs, all moreover contained within the sphere of protection of the invention as defined by the following claims.

## Claims

1. Method for sanitizing a foodstuff (100) contaminated with mycotoxins, comprising the steps of: placing the foodstuff (100) within a reaction chamber (20); generating an aeriform fluid comprising ozone; conveying said aeriform fluid and introducing it into said reaction chamber (20); degradating at least part of the mycotoxin molecules contaminating the foodstuff (100) by means of an inactivation reaction with the ozone comprised in the aeriform fluid; controlling the temperature of said inactivation reaction.

2. Method for sanitizing a foodstuff (100) contaminated with mycotoxins according to Claim 1, wherein the step of controlling the temperature of the inactivation reaction comprises a step of cooling the foodstuff (100) placed within the reaction chamber (20).

3. Method for sanitizing a foodstuff (100) contaminated with mycotoxins according to any of the preceding Claims, wherein the step of controlling the temperature of the inactivation reaction comprises a step of cooling the aeriform fluid prior to said step of introducing the aeriform fluid within the reaction chamber (20).

4. Method for sanitizing a foodstuff (100) contaminated with mycotoxins according to any of the preceding Claims, wherein during the step of controlling the temperature of the inactivation reaction said temperature is kept between 0°C and 10°C.

5. Method for sanitizing a foodstuff (100) contaminated with mycotoxins according to any of the preceding Claims, further comprising the steps of: setting an upper threshold value as a function of own features of the contaminated foodstuff (100); detecting a humidity value of the aeriform fluid; dehumidifying said aeriform fluid whenever said humidity value exceeds the upper threshold value.

6. Method for sanitizing a foodstuff (100) contaminated with mycotoxins according to Claim 5, further comprising the steps of: setting a lower threshold value as a function of own features of the contaminated foodstuff (100); humidifying said aeriform fluid whenever said humidity value is lower than the lower threshold value.

7. Method for sanitizing a foodstuff (100) contaminated with mycotoxins according to one of Claims 5 or 6, wherein the own features of the contaminated foodstuff (100) comprise granulometry of the foodstuff.

8. Method for sanitizing a foodstuff (100) contaminated with mycotoxins according to any of the preceding Claims, further comprising a step of withdrawing the aeriform fluid from said reaction chamber (20) and a step of conveying the aeriform fluid through a recirculation duct (6a, 6c) and then reintroducing it in the reaction chamber (20).

9. Apparatus (1) for sanitizing foodstuffs (100), comprising means for generating an aeriform fluid comprising ozone (3), a reaction chamber (20) intended for containing a foodstuff (100) contaminated with mycotoxins, means for conveying said aeriform fluid to the reaction chamber (20) and means for controlling the temperature (5) within the reaction chamber (20).

10. Apparatus (1) for sanitizing foodstuffs (100) according to Claim 9, wherein the means for controlling the temperature (5) comprise at least a refrigerator (50) designed to subtract heat from the aeriform fluid before its entrance within the reaction chamber (20).

11. Apparatus (1) for sanitizing foodstuffs (100) according to one of Claims 9 or 10 wherein the means for controlling the temperature (5) comprise at least a refrigerator (50) designed to subtract heat from the foodstuff placed within the reaction chamber (20).

12. Apparatus (1) for sanitizing foodstuffs (100) according to Claim 11 when depending from Claim 10 wherein the means for controlling the temperature (5) comprise at least a single refrigerator (50) designed to subtract heat from the aeriform fluid before its entrance within the reaction chamber (20) as well as to substract heat from the foodstuff placed within the reaction chamber (20).

13. Apparatus (1) for sanitizing foodstuffs (100) according to one of Claims from 9 to 12, further comprising means for varying the humidity value (7a, 7b) of the aeriform fluid before its entrance in the reaction chamber (20).

14. Apparatus (1) for sanitizing foodstuffs (100) according to one of Claims from 9 to 13, wherein the reaction chamber exhibits at its bottom a plurality of intake holes (24) for the aeriform fluid.

15. Apparatus (1) for sanitizing foodstuffs (100) according to Claim 14, comprising a silo (2) internally defining the reaction chamber (20) and comprising a discharge hopper (22), which defines a plurality of interstitial volumes (25a) annular, concentric and having different diameters, each intake hole (24) opening on a different interstitial volume (25a).

16. Apparatus (1) for sanitizing foodstuffs (100) according to one of Claims from 9 to 15, wherein the reaction chamber (20) exhibits at least an outlet hole (26) for the aeriform fluid; the apparatus comprising a recirculation duct (6a, 6c) external to the reaction chamber (20) for recirculating the aeriform fluid withdrawn from said outlet hole (26) and reintroducing it into the reaction chamber (20).
